# EUROPEAN PATENT SPECIFICATION

(11) **EP 0 400 792 B1**
(45) Date of publication and mention of the grant of the patent: **17.01.1996**
(21) Application number: 90303817.2
(22) Date of filing: 09.04.1990
(51) Int. Cl.: A01K 5/00, A01K 5/02

(54) **Apparatus for delivering flowable material**
Abgabevorrichtung für fliessfähigen Substanzen
Distributeur pour matières possédant une capacité de fluage

(30) Priority: 10.04.1989 GB 8907983; 29.06.1989 GB 8914908; 19.01.1990 GB 9001251
(43) Date of publication of application: 05.12.1990
(73) Proprietor: Allen, Peter William, Didcot, Oxfordshire OX11 0DJ (GB)
(72) Inventor: Allen, Peter William, Didcot, Oxfordshire OX11 0DJ (GB)
(74) Representative: Johnson, Terence Leslie

(56) References cited:
- EP-A- 0 095 981
- DE-B- 1 255 038
- DE-C- 719 984
- GB-A- 1 571 474
- GB-A- 1 571 474
- GB-A- 2 152 349
- US-A- 4 411 390

## Description

The invention relates to apparatus for delivering flowable material such as particulate material. The invention particularly relates to apparatus for delivering cattle feed pellets from a source to a desired location such as a feed trough, though it will be understood that the invention is not limited to this and may deliver or dispense maize gluten, meal compound, powders, beet pulp nuts and the like from a store to a required location.

Apparatus for delivering cattle feed pellets to a feed trough has previously been proposed but it has the disadvantage that it does not repeatedly deliver a controlled quantity to the trough and this is important because cattle should have a controlled diet, particularly when they are being fed during milking. Also, in a milking parlour the cattle stalls are side-by-side with a dividing wall between them. Each trough of a stall or a pair of stalls should ideally be fed with feed from a common feed apparatus.

DE-B-1255038 discloses an apparatus for delivering flowable material such as particulate material, comprising a discharge throat for the material, rotatable dispenser means in the throat, arranged for passing material through the throat on rotation. Obturator means are provided, which would effectively obviate the passage of material through the throat when the dispenser means is stationary.

It is an object of the invention to provide apparatus which can feed a desired quantity of material accurately and without spillage from the apparatus.

According to the invention there is provided apparatus for delivering flowable material such as particulate material, comprising a discharge throat for the material, rotatable dispenser means in the throat, arranged for passing material through the throat on rotation, means to obviate the passage of material through the throat when the dispenser means is stationary comprising a plurality of spaced arms for feeding the material through the throat, the arms and throat cooperating to obturate the throat by a wiping contact, the throat comprising fixed walls and opposed plates converging towards a discharge outlet of the throat and resilient means urging the opposed plates into said wiping contact with the arms, characterised by a throttle device mounted upstream in the discharge throat and comprising an L-shaped plate having one limb extending in the downstream direction into the throat substantially orthogonally to the opposed plates and having a notch means to accommodate the rotatable dispenser means the other limb being adapted to cover the discharge throat at least partially, such that the L-shaped plate may be adjusted to different positions between the walls thereby enabling the volume of the dispenser means to be varied.

The L-shaped plates may be adjustable by sliding after releasing a securing means.

The securing means may comprise a slot on the other limb in which the securing means is received.

The apparatus may include motor means adapted for connection with the dispenser means by a connection means comprising a shaft. The opposed plates may cooperate with resilient means adapted to urge distal ends of the plates between adjacent arms of the dispenser means whereby to obviate passage through the throat when the dispenser means is stationary. This again provides a relatively simple construction whereby spillage through the throat may be obviated.

A free end of each arm may mount a flexible wiping member. This construction provides a further safeguard against spillage.

In a suitable construction, the flexible wiping member may comprise two rubber blades carried by an arm and projecting beyond a free end thereof.

To provide for ease of maintenance, the motor means may be housed in a housing which is removably mounted on the apparatus.

Moreover, where the housing is detachable the motor means may be adapted for connection with the dispenser means by a releasable connection means comprising an output shaft of the motor means and a shaft of the dispenser means. This mechanical connection is a relatively simple one to construct.

The releasable connection means may comprise a yoke adapted to receive an end of the shaft remote from the discharge throat. This mechanical connection is also a relatively simple one to construct.

The apparatus may be mounted on a frame. This provides for ease of use of the apparatus.

Preferably, the frame may be mobile.

Such a mobile frame may comprise a chassis mounted on rotatable ground engageable means by which the frame is adapted to be mobile. These means may be wheels, which provides for a relatively simple construction.

There may be a remote control for the motor means. This provides for control of the apparatus from a point remote therefrom, for example in a cab of a tractor, in which case the apparatus may include a connection for a three-point linkage of such a tractor device.

In order to provide for flexibility of use, the apparatus may have a dispenser means which may comprise a rotatable shaft which may be adjustable in length.

Again, to provide for flexibility in use, the apparatus may comprise means adapted to adjust the volume of the dispensing means.

It is possible using the invention to provide apparatus which can deliver a desired metered quantity of cattle feed to either or of two feed stations.

Apparatus embodying the invention is hereinafter described, by way of example, with reference to the accompanying drawings.
Fig. 1 is a plan view of one embodiment of apparatus according to the invention, the apparatus being in one position;
Fig. 2 is a plan view of the apparatus of Fig. 1, in another or alternative position;
Fig. 3 is a sectional view of the apparatus taken on the line 3-3 of Fig. 2;
Fig. 4 is a sectional view of the apparatus of Figs. 1 and 2, taken on the line 4-4 in Fig. 2;
Fig. 5 is a sectional view of part of a second embodiment of the apparatus according to the invention;
Fig. 6 shows an end elevational view of a hopper feeder modified by a second embodiment of apparatus according to the invention;
Fig. 7 is an end elevational view of a free-standing embodiment of apparatus according to the invention;
Fig. 8 is a side elevational view of the apparatus of Fig. 7;
Fig. 9 shows a side elevational view partly in section of a further embodiment of apparatus according to the invention;
Fig. 10 is a plan view with parts cut away of the apparatus of Fig. 9;
Fig. 11 is a sectional elevational view on line 8-8 of Fig. 10;
Fig. 12 is, to a smaller scale, an end view of the apparatus of Figs. 9-11, mounted on a frame;
Fig. 13 is a side elevational view of the apparatus of Fig. 12;
Fig. 14 is a side view of the apparatus of Figs. 12 and 13 mounted on a trailer; and
Fig. 15 is a perspective view of the trailer apparatus of Fig. 14.

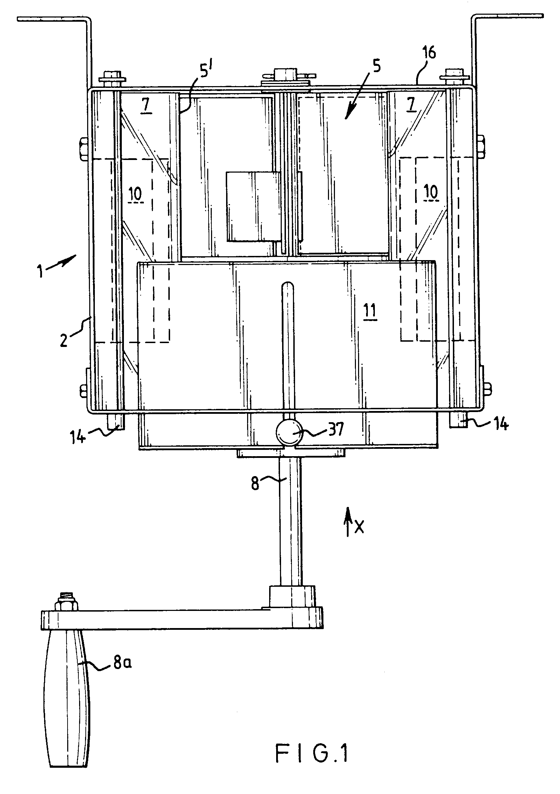

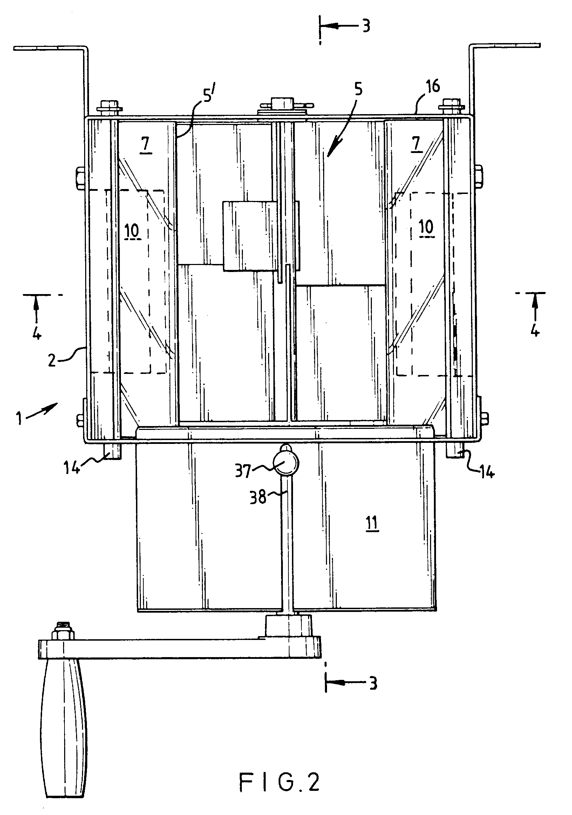

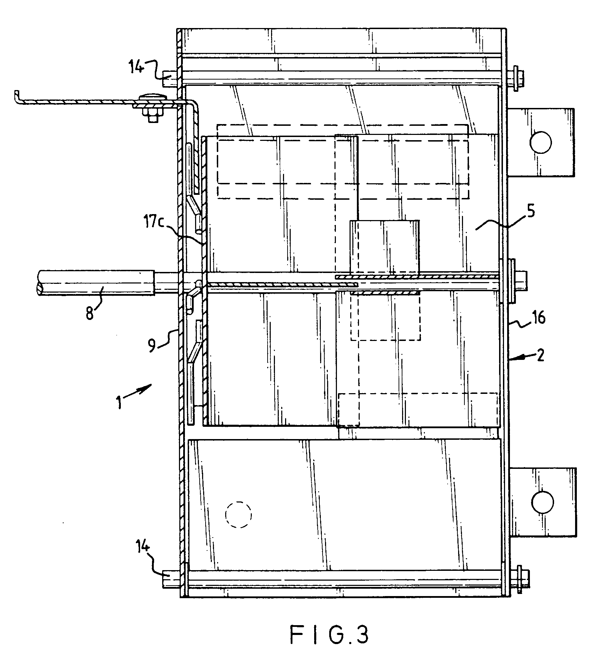

Referring firstly to Figs. 1 to 5 of the drawings, there is shown apparatus 1 for delivering say cattle feed pellets to feed troughs (not shown) positioned below it. The apparatus 1 comprises a casing 2 with an inlet 3 for the pellets and a discharge throat or outlet 4 for the pellets, a rotatable dispensing means in the form of a rotatable chamber 5 in the casing for carrying a quantity of pellets from the inlet to the outlet, and movable guide means 6 adjacent the outlet for selectively guiding the pellets from the chamber in either one of two directions depending on the sense of rotation of the chamber 5.

The chamber 5 has boundary parts 5′ which are arranged to have a wiping contact with the casing so that the passage of particulate material therebetween is obviated.

The casing 2 is a generally rectangular metal box which has an opening at the top providing the inlet 3 and an opening at the bottom providing the outlet 4. The rotatable chamber 5 is in fact part of a dispensing or metering device having four chambers which rotate with the device and which deliver the pellets to the outlet 4 from the inlet 3. The device rotates about an axis of rotation defined by the longitudinal axis of a spindle 8. The movable guide means is adjacent the outlet 4, for selectively guiding the pellets from the chamber in either one of two directions depending on the sense of rotation of the chamber is pivotable.

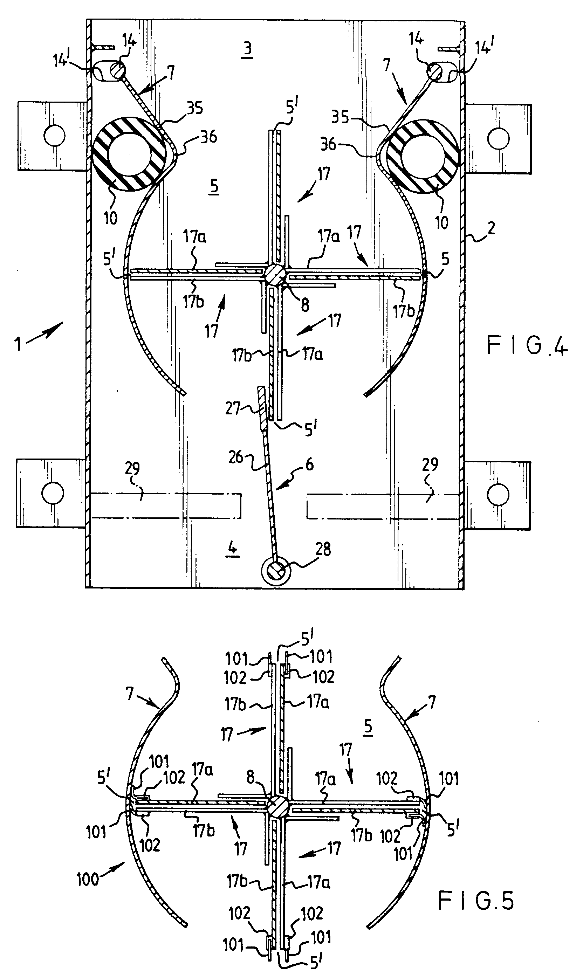

In the casing 2 there are two lateral (as viewed in the direction of arrow 'X' in Fig. 1) side cheeks or opposed retainer plates 7 forming part of the casing and which are mounted in the casing as by being welded to a respective spindle 14 which passes through front 9 and rear walls 16 of the casing 2. The spindles 14 are pivotable in seatings comprising elongate slots 14′ in the two walls of the casing and between the respective retainer cheek or plate and the adjacent side wall of the casing there is resilient means in the form of a fixed rubber buffer 10 cooperating with the the adjacent cheek 7 against which buffer 10 the respective cheek 7 rests. The buffer 10 is received in an essentially V-shaped part of the associated side cheek 7, the part of that cheek below the buffer being convex towards the adjacent side wall of the casing 2, as seen in Fig. 4. It is the side cheeks or retainer plates 7 with which each chamber 5 has wiping contact during metering use, via free edges of arms or plates 17 which project from the spindle 8 equiangularly spaced at 90° so that four chambers 5 for pellets are formed between any two adjacent or pairs of arms 17, the volume of each chamber 5 being adjustable by adjusting the length of the spindle 8 from which the arms or plates 17 project, each arm or plate 17 in fact comprising two parallel arm or plate parts 17a and 17b so that when the effective length of the spindle 8 is shortened by movement of telescopic spindle parts towards the rear wall 16 of the casing 2, the two plates 17a and 17b slide over one another in overlapping relation and therefore effectively adjust the volume of the chamber 5 by pushing an end stop 17c thereof on the spindle 8 and to which one plate part is connected, simultaneously away from a handle 8a with the plate parts (17a and 17b). The spindle 8 is formed of two telecopic parts so that its length can effectively be altered as by lengthening or shortening.

The guide means 6 comprises a flat resilient metal plate 26 with an upstanding lug 27 at one end. The lug is contacted by the arms 17 which just in general overlap the top edge of the plate 26. The plate 26 is secured as by welding to a spindle 28 which is freely pivotable, in the front 9 and rear 16 walls of the casing 2, between two end positions defined by resilient stop means in the form of rubber buffers 29 mounted on lugs welded to the side walls of the casing 2.

In operation, the feeder device 1 is secured to a wall of a milking parlour by lugs 12 so that it sits centrally over a partition between two side-by-side milking stalls whereby a chute attached to the casing 2 can direct feed pellets into a feed trough in one stall and a chute also attached to casing 2 can direct feed pellets into the feed through of the other stall. (The two chutes will generally be formed in one unit with a triangular prism-shaped attachment which is secured to the outlet 4 of the casing). A hopper (not shown) of feed pellets is secured to the top of the casing 2 so that the feed pellets fall into the inlet 3. They are directed to the inlet 3 by the inclined parts 35 of the two facing cheeks 7 and fall into the chamber or chambers 5 facing upwards. They are prevented from falling to the front of the metering device by a slidable plate 11 which passes through a slot and which has downturned lips. The plate 11 extends across the distance between noses 36 of the two retainer plates 13. It is locked in position by a nut and bolt 37 passing through a slot 38 and a hole in a support plate 39 in the front surface of the front wall 9, of the casing 2.

When the spindle 8 is turned in a clockwise direction the plate 26 is moved to the position shown in Figure 4. In this end position the plate 26 and the rubber buffer 29 have enough inherent "give" to enable the arm 17 instantaneously contacting it to spring past it and the finger 27 as it revolves. At the same time pellets in the chamber between that arm and the next one are guided by the plate 26 in the direction through the outlet 4, to the chute and so to the other one of the feed stalls. If feed is to be directed through the opposite chute it is merely necessary to reverse the turning process so that the metering device and hence its four chambers turn in the anti-clockwise sense (as viewed in Fig. 4). The first arm 17 to touch the finger 27 automatically pivots the plate 26 to the second end position against the left hand (as viewed) buffer (not shown). As the plates just overlap the plate the guide plate 26 at all times closes off the chute and opens the path through the outlet 4 to the opposite chute. Thus one of two directions is selectively obtained automatically merely by changing the sense of rotation of the chambers and during the change over (as well as when the plate reaches the other end position) the other of the two directions is closed off against passage of feed pellets.

It will be appreciated that when the leading arm of the two drums forming a chamber containing feed pellets passes the nose 36 of a retainer plate 13, the curved part of the plate 13 retains the feed pellets in the chamber. At the same time the whole of the plate 13 prevents more pellets from entering the chamber or at least bypassing it between the free ends of the arms and the side wall of the casing disc 21 and plate 11 prevent pellets falling through to the front of the apparatus, while the arms 17 lie closely adjacent the rear wall 16 (with sufficient clearance for turning) so that none can fall through to the rear of the casing 2. In this way a metered quantity of pellets is always delivered to the outlet 4 as each chamber will be known by the operator to hold a determined quantity of a particular material. This determined quantity can be delivered to either chute merely by changing the sense of rotation of the chambers, and this can take place at whatever the speed of rotation. If it is necessary to change the volume of the chambers to give more or less of a particular feed, or to deliver feed of a different density, the effective length of the arms is altered.

During operation to deliver a metered supply of feed pellets, the free edges 5 of the arms or plates 17 wipe over the side cheeks 7 so preventing trapping of material being delivered which could foul operation or delivering of more feed than is desired. Moreover, mounting of the cheeks 7 against the buffers 10 ensures that if there is the possibility of the mechanism being jammed by material being trapped, the free of the rotation is such that the side cheeks can "give" in other words move away from the chambers 5 towards the side plates to allow the jamming material to pass, after which the side cheeks 7 return to their original positions as shown.

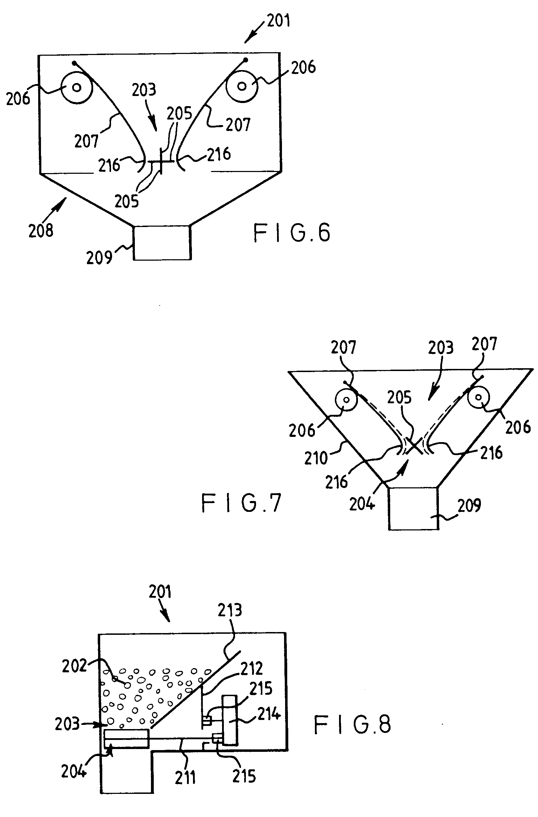

In a second embodiment 100 shown in Fig. 5, each plate part 17a, 17b has a flexible resilient end member 101, one being secured on an outside (as viewed) edge of one plate part and the other being mounted on the outside or opposite (as viewed) edge of the other plate part so that a continuous longitudinally extending flexible edge strip is obtained fore and aft of the chamber 5 and of which the length is adjusted by overlapping by sliding the plate parts 17a and 17b one over the other as described with reference to Figs. 1-4. The free edges 101 are "bent" to have a wiping contact with the side cheeks 7, to operate as described previously to obviate passage of material between the chamber and the side cheeks.

The flexible stops 101 are mounted in holders 102 of metal secured to the plate parts as by welding.

In every embodiment, the apparatus may be operated by the handle manually, or by a power drive such as a vacuum motor.

Referring now to Figs. 6-8 of the drawings, in which like parts are referred ot by like numerals, there is shown apparatus 201 for delivering flowable material 202 such as cattle feed pellets, comprising a discharge throat 203 for the material 202, a rotatable dispenser means 204 in the throat 203 having a plurality of spaced arms 205 for feeding material through the threat 203, and means 206 to bias obturator means 207 of the apparatus between adjacent arms 205 whereby to seek to obviate spillage through the throat 203.

The apparatus 201 may form a unit which may be mounted in an existing hopper feeder 208 as shown in Fig. 6, which has an outlet 209 below the throat 203. Alternatively, as shown in Figs. 7 and 8, the apparatus 201 may be free-standing, and include a funnel shaped body 210 with an outlet 209 for material below (as viewed) the throat 203.

The rotatable dispenser 204 comprises four arms 205 spaced equiangularly round a spindle 211 which in the embodiments shown passes through a wall 212 supporting a boundary wall 213 and which mounts a motor device 214, in this case an electric motor. The motor 214 is mounted via isolators 215 to seek to obviate vibration.

The throat 203 comprises opposite cheeks, plates or walls 207 which converge towards the dispenser means 204, where each wall 207 has a curved nose 216. The walls 207 comprise with the arms 205 the obturator means.

Each wall 207 is mounted on the biassing means 206 which is resilient means in the form of a rubber bush which has the effect of urging its respective wall 207 towards the dispenser 204 and the opposite wall 207 so that in the Fig. 7 position where no arm 205 touches any wall 207, a nose 216 assumes the dashed line position between adjacent arms 205 whereby to obviate spillage through the throat. This is achieved because the free end of the adjacent upper arms 205 as viewed overlaps the noses 216 so that no material in the apparatus 201 above the throat 203 can pass therethrough to the outlet 209. When the dispenser means 204 is rotated, the arms 205 engage the walls 207 and push them apart to the full line position against the pressure of the bushes 206 so that the material 202 is carried between adjacent arms 205 passed the wall 207 through the throat 203 to the outlet 209.

It will be understood that the apparatus 201 is always sealed against spillage when not in use, and that the side walls 207 being movable but resiliently mounted allow large particulates to pass through the throat 203 to the outlet 209.

This is in contrast to existing auger type feeders where jamming occurs with large particulate, and material can in any event spill past the auger.

The electric motor 214 may be reversible so that feed can be fed in different directions when the arms act on a "flip-flop" guide plate (not shown) to direct feed in one or other of two directions, as described in the specification of my United Kingdom Patent N°. 1 571 474.

The accuracy or calibration can be determined from the number of revolutions of the motor 214.

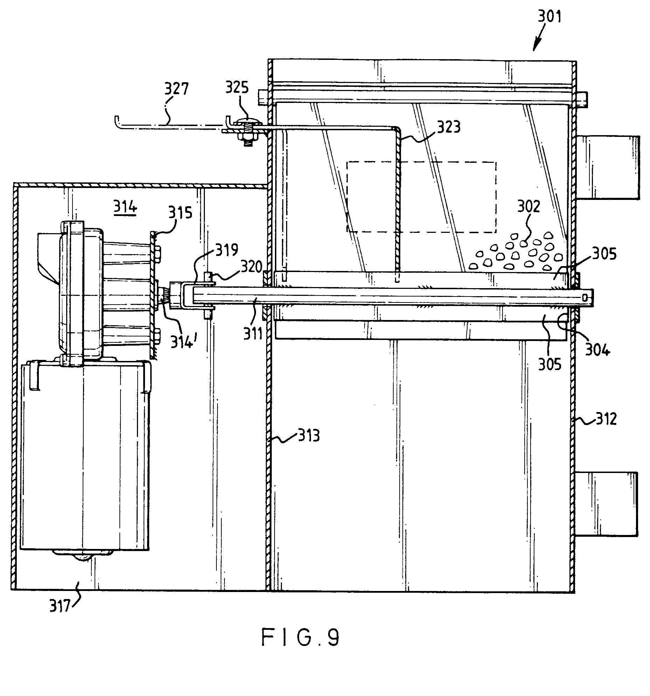

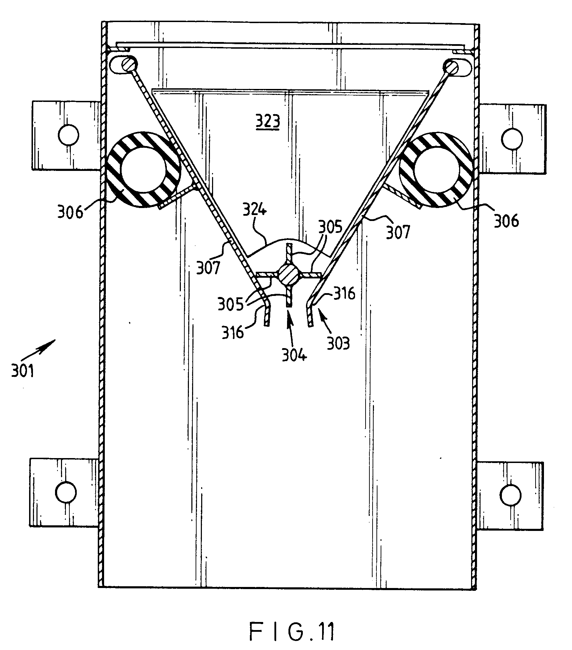

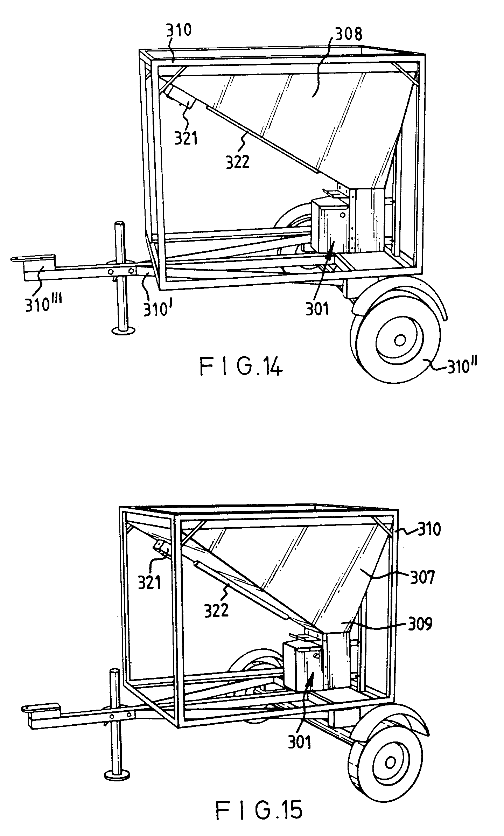

Referring now to Figs. 9-15 of the drawings, there is shown apparatus 201 for delivering flowable material 302 such as cattle feed pellets, comprising a discharge throat 303 for the material 302, a rotatable dispenser means 304 in the throat 303 having a plurality of spaced arms 305 for feeding material through the throat 303 and means 306 to bias obturator means 307 of the apparatus 301 between adjacent arms 305 whereby to seek to obviate spillage through the throat.

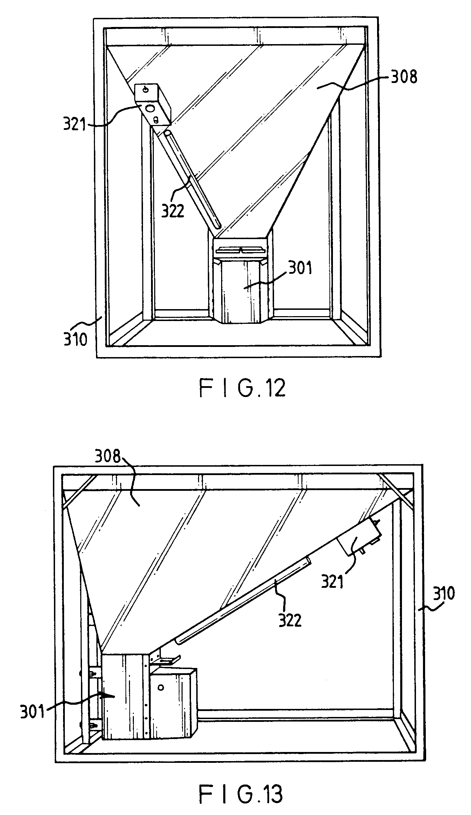

The apparatus 301 may form a unit which may be mounted under a hopper feeder 308 shown in Figs. 12-15, which has an outlet 309 leading to apparatus 301.

The apparatus 301 may be free-standing, mounted on a support such as a wall or mounted on a frame 310 which itself may be mounted on a wheeled chassis such as an A-frame 310′ on wheels 310" with a hitch 310‴.

The rotatable dispenser means 304 comprises four arms 305 spaced equiangularly round a spindle 311 which passes through a wall 312 and a boundary wall 313 which mounts a motor devices 314, in this case an electric motor. The motor 315 is mounted via isolators 315 to seek to obviate vibration.

The throat 303 comprises opposite cheeks, plates or walls 307 which converge towards the dispenser means 304, where each wall 307 has a curved nose 316. The walls 397 comprise with the arms 305 the obturator means.

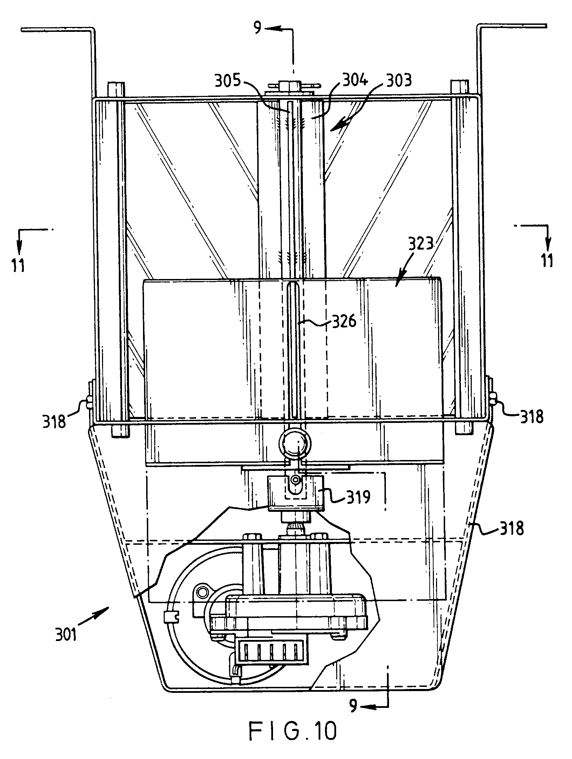

Each wall 307 is mounted on the biassing means 306 which is resilient means in the form of a rubber bush which has the effect of urging its wall 307 towards the dispenser means 304 and the other opposite wall 307 so that in the Fig. 10 position where no arm 305 touches any wall 307, a nose 316 assumes the dashed line position between adjacent arms 305 whereby to seek to obviate spillage through the throat 303. This is achieved because the free end of the adjacent upper arms 305 as viewed overlaps the noses 316 so that no material in the apparatus 301 above the throat 303 can pass therethrough to the outlet 309. When the dispenser means 304 is rotated, the arms 305 engage the walls 306 and push them apart to the full line position against the pressure of the bushes 306 so that material 302 is carried between adjacent arms 305 passed the walls 307 through the throat 303 and thence to the outlet 309.

It will be understood that the apparatus 301 is always sealed against spillage when not in use, and that the side walls 307 being resiliently mounted and therefore movable within limits allow large particulates to pass through the throat 303 to the outlet 309.

This is in contrast to existing auger type feeders where jamming occurs with large particulate, and material can in any event spill past the auger.

The electric motor 314 may, as before, be reversible so that feed can be fed in different directions when the arms act on a "flip-flop" guide plate (not shown) to direct feed in one or other of two directions, as described in the specification of my United Kingdom Patent N°. 1 571 474.

As before, the accuracy or calibration can be determined from the number of revolutions of the motor 314. Moreover, the motor 314 is in a housing 317 which is completely detachable from the wall 313 by being removably secured thereto by securing means such as six bolts 318, three on each side. An output shaft 314′ from the motor 314 has a yoke 319 which slips over the proximal end of the shaft 311 and is secured thereto by a transverse pin such as a split pin 320.

The motor 314 can readily be removed for repair, conversion of the feeder to another drive or for any other reason, merely by unbolting the bolts 318, disconnecting the pins 320 and simply lifting the housing 317 with the motor away from the feeder 301. The motor 314 may just as easily be mounted on the feeder 301 by carrying out a reverse procedure.

The motor 314 can be a left hand or right hand motor.

The control of the motor 314 can be by a control box 321 mounted on the hopper, electrical leads to which can be run down a conduit 322 (Figs. 12-15). Where the apparatus 314 is mounted on an A-frame 310′, the apparatus 301 can be linked up with a three-point linkage take-up of a tractor (not shown). Electrical control can be effected from a hand held master device in the cab of the tractor or other vehicle and the rotation of the motor 314 and thus of the shaft 311, or alternatively of the shaft 311 directly off the three-point linkage of the tractor, can be related to tractor speed over the ground so that a metered amount of feed can be deposited as the apparatus traverses the ground. For example, there can be deposited 11b. of feed for every foot traversed at 5 m.p.h.

The frame 310 may be fixed, rather than mounted on an A-frame.

In all embodiments, the volume of the feeder 301 may be varied by a throttle device 323 comprising an L-shape plate which has a notch 324 cut out to accommodate the dispenser means 304 and which may be adjusted to different positions between the walls 312 and 313 by sliding after releasing a securing means 325 and sliding the device 323 to say the chain-dashed line position shown in Fig. 9. There is a slot 326 in a plate 327 of the device 323 to accommodate this.

It will also be understood that any suitable motor 314 other than an electrical motor may be used, for example a vacuum motor.

## Claims

1. Apparatus for delivering flowable material such as particulate material, comprising a discharge throat (4) for the material, rotatable dispenser means (5,304) in the throat (4), arranged for passing material through the throat (4) on rotation, means (5') to obviate the passage of material through the throat (4) when the dispenser means (5,304) is stationary comprising a plurality of spaced arms (205) for feeding the material through the throat (4), the arms and throat cooperating to obturate the throat by a wiping contact, the throat (4) comprising fixed walls (312,313) and opposed plates (7) converging towards a discharge outlet of the throat and resilient means (10) urging the opposed plates (7) into said wiping contact with the arms, characterised by a throttle device (323) mounted upstream in the discharge throat (4) and comprising an L-shaped plate (323) having one limb extending in the downstream direction into the throat (4) substantially orthogonally to the opposed plates (7) and having a notch means (324) to accommodate the rotatable dispenser means (5,304), the other limb (327) being adapted to cover the discharge throat (4) at least partially, such that the L-shaped plate (323) may be adjusted to different positions between the walls (312 and 313) thereby enabling the volume of the dispenser means to be varied.

2. Apparatus according to Claim 1, characterised by the L-shaped plate (323) being adjustable by sliding after releasing a securing means (325).

3. Apparatus according to Claim 2, characterised by the securing means (325) comprising a slot (326) in the other limb (327) in which the securing means (325) is received.

4. Apparatus according to any preceding claim, characterised by motor means (214, 314) adapted for connection with the dispenser means (5, 304) by a connection means comprising a shaft (211, 311).

5. Apparatus according to Claim 1, characterised by the opposed plates (7) cooperating with resilient means (10;306) adapted to urge distal ends of the plates (7) between adjacent arms of the dispenser means (5,304) whereby to obviate passage through the throat when the dispenser means is stationary.

6. Apparatus according to Claim 5, characterised by a free end (25) of each arm mounting a flexible wiping member (101).

7. Apparatus according to Claim 6, characterised by the flexible wiping member (101) comprising two rubber blades carried by an arm and projecting beyond a free end thereof.

8. Apparatus according to claim 4, characterised by the motor means (214, 324) being housed in a housing (317) which is removably mounted on the apparatus.

9. Apparatus according to claim 4, characterised by a releasable connection means (319, 320) comprising a yoke (319) adapted to receive an end of the shaft (311) remote from the discharge throat (4).

10. Apparatus according to any preceding claim, characterised by a frame (310') mounting the apparatus.

11. Apparatus according to Claim 10, characterised by the frame (310') being mobile.

12. Apparatus according to Claim 11, characterised by the frame (310') comprising a chassis mounted on rotatable ground engageable means (310") by which the frame is adapted to be mobile.

13. Apparatus according to claims 4 or 8, characterised by a remote control for the motor means (214,324).

14. Apparatus according to any of Claims 11 to 13, characterised by a connection for a three-point linkage of a tractor device.

15. Apparatus according to any preceding claim, characterised by the dispenser means (5,304) comprising a rotatable shaft which is adjustable in length.

## Patentansprüche

1. Abgabevorrichtung für fließfähige Substanzen wie z.B. eine aus Teilchen bestehende Substanz mit einem Austrittshals (4) für die Substanz, einem drehbaren Ausgabemittel (5, 304) im Hals (4), das so angeordnet ist, daß es beim Drehen die Substanz durch den Hals (4) hindurchleitet, einem Mittel (5') zur Verhinderung des Hindurchleitens der Substanz durch den Hals (4), wenn das Ausgabemittel (5, 304) stillsteht, das mehrere voneinander beabstandete Arme (205) zum Zuführen der Substanz durch den Hals (4) umfaßt, wobei die Arme und der Hals zusammenwirken, um den Hals durch einen wischenden Kontakt zu verschließen, wobei der Hals (4) feststehende Wände (312, 313) und einander gegenüberliegende Platten (7), die zu einem Austrittsauslaß des Halses zusammenlaufen, und elastische Mittel (10), die die einander gegenüberliegenden Platten (7) in den wischenden Kontakt mit den Armen drängen, umfaßt, gekennzeichnet durch eine Drosselvorrichtung (323), die stromaufwärts in dem Austrittshals (4) angebracht ist und eine L-förmige Platte (323) umfaßt, die einen Schenkel, der sich in stromabwärts verlaufender Richtung in den Hals (4), im wesentlichen orthogonal zu den einander gegenüberliegenden Platten (7) erstreckt, und ein Kerbmittel (324) zur Aufnahme des drehbaren Ausgabemittels (5, 304) aufweist, wobei der andere Schenkel (327) so ausgeführt ist, daß er den Austrittshals (4) zumindest teilweise bedeckt, so daß die L-förmige Platte (323) in verschiedene Positionen zwischen den Wänden (312 und 313) eingestellt werden kann, wodurch das Volumen des Ausgabemittels geändert werden kann.

2. Vorrichtung nach Anspruch 1, dadurch gekennzeichnet, daß die L-förmige Platte (323) nach Lösen eines Befestigungsmittels (325) durch Verschieben verstellt werden kann.

3. Vorrichtung nach Anspruch 2, dadurch gekennzeichnet, daß das Befestigungsmittel (325) in dem anderen Schenkel (327) einen Schlitz (326) aufweist, in dem es aufgenommen ist.

4. Vorrichtung nach einem der vorhergehenden Ansprüche, gekennzeichnet durch ein Motormittel (214, 314), das zur Verbindung mit dem Ausgabemittel (5, 304) über ein Verbindungsmittel mit einer Welle (211, 311) ausgelegt ist.

5. Vorrichtung nach Anspruch 1, dadurch gekennzeichnet, daß die einander gegenüberliegenden Platten (7) mit einem elastischen Mittel (10; 306) zusammenwirken, das so ausgelegt ist, daß es distale Enden der Platten (7) zwischen benachbarte Arme des Ausgabemittels (5, 304) drängt, um dadurch das Hindurchströmen durch den Hals bei stillstehendem Ausgabemittel zu verhindern.

6. Vorrichtung nach Anspruch 5, dadurch gekennzeichnet, daß an einem freien Ende (25) jedes Arms ein biegsames Wischglied (101) angebracht ist.

7. Vorrichtung nach Anspruch 6, dadurch gekennzeichnet, daß das biegsame Wischglied (101) zwei Gummiflügel umfaßt, die von einem Arm getragen werden und über ein freies Ende davon hinwegragen.

8. Vorrichtung nach Anspruch 4, dadurch gekennzeichnet, daß das Motormittel (214, 324) in einem Gehäuse (317) untergebracht ist, das abnehmbar an der Vorrichtung angebracht ist.

9. Vorrichtung nach Anspruch 4, gekennzeichnet durch ein lösbares Verbindungsmittel (319, 320), das einen Bügel (319) umfaßt, welcher zur Aufnahme eines Endes der Welle (311) vom Austrittshals (4) entfernt ausgelegt ist.

10. Vorrichtung nach einem der vorhergehenden Ansprüche, gekennzeichnet durch einen Rahmen (310'), an dem die Vorrichtung angebracht ist.

11. Vorrichtung nach Anspruch 10, dadurch gekennzeichnet, daß der Rahmen (310') beweglich ist.

12. Vorrichtung nach Anspruch 11, dadurch gekennzeichnet, daß der Rahmen (310') ein Gestell umfaßt, das an einem im Boden eingreifbaren, drehbaren Mittel (310'') angebracht ist, wodurch der Rahmen beweglich ausgelegt ist.

13. Vorrichtung nach Anspruch 4 oder 8, gekennzeichnet durch eine Fernsteuerung für das Motormittel (214, 324).

14. Vorrichtung nach einem der Ansprüche 11 bis 13, gekennzeichnet durch einem Anschluß für einen Dreipunktanbau für eine Traktoreinrichtung.

15. Vorrichtung nach einem der vorhergehenden Ansprüche, dadurch gekennzeichnet, daß das Ausgabemittel (5, 304) eine in der Länge verstellbare, drehbare Welle umfaßt.

## Revendications

1. Appareil distributeur pour matière possédant une capacité de fluage telle qu'une matière particulaire, comprenant un étranglement de décharge (4) pour la matière, un moyen distributeur rotatif (5, 304) dans l'étranglement (4), arrangé de manière à faire passer de la matière dans l'étranglement (4) lors de sa rotation, un moyen (5') pour empêcher le passage de matière dans l'étranglement (4) lorsque le moyen distributeur (5, 304) est stationnaire, comprenant une pluralité de bras espacés (205) pour amener la matière dans l'étranglement (4), les bras et l'étranglement coopérant de façon à bloquer l'étranglement par un contact de raclage, l'étranglement (4) comprenant des parois fixes (312, 313) et des plaques opposées (7) convergeant en direction d'une sortie de décharge de l'étranglement et un moyen élastique (10) poussant les plaques opposées (7) dans ledit contact de raclage avec les bras, caractérisé par un dispositif d'étrangleur (323) monté en amont dans l'étranglement de décharge (4) et comprenant une plaque en forme de L (323) ayant un membre s'étendant dans la direction en aval dans l'étranglement (4) substantiellement orthogonalement aux plaques opposées (7) et ayant un moyen d'encoche (324) pour recevoir le moyen distributeur rotatif (5, 304), l'autre membre (327) étant adapté pour couvrir l'étranglement de décharge (4) au moins partiellement, de sorte que la plaque en forme de L (323) puisse être ajustée suivant différentes positions entre les parois (312 et 313), pour permettre ainsi de faire varier le volume du moyen distributeur.

2. Appareil selon la revendication 1, caractérisé par le fait que la plaque en forme de L (323) est ajustable par glissement après libération d'un moyen de fixation (325).

3. Appareil selon la revendication 2, caractérisé par le fait que le moyen de fixation (325) comprend une fente (326) dans l'autre membre (327) dans laquelle le moyen de fixation (325) est reçu.

4. Appareil selon l'une quelconque des revendications précédentes, caractérisé par un moyen moteur (214, 314) adapté pour être connecté au moyen distributeur (5, 304) par un moyen de connexion comprenant un arbre (211, 311).

5. Appareil selon la revendication 1, caractérisé par le fait que les plaques opposées (7) coopèrent avec un moyen élastique (10, 306) adapté pour pousser les extrémités distales des plaques (7) entre des bras adjacents du moyen distributeur (5, 304), pour ainsi empêcher le passage dans l'étranglement lorsque le moyen distributeur est stationnaire.

6. Appareil selon la revendication 5, caractérisé par le fait qu'à une extrémité libre (25) de chaque bras est monté un organe de raclage flexible (101).

7. Appareil selon la revendication 6, caractérisé par le fait que l'organe de raclage flexible (101) comprend deux lames en caoutchouc portées par un bras et se projetant au-delà d'une extrémité libre de celui-ci.

8. Appareil selon la revendication 4, caractérisé par le fait que le moyen moteur (214, 324) est logé dans un logement (317) qui est monté de manière amovible sur l'appareil.

9. Appareil selon la revendication 4, caractérisé par le fait qu'un moyen de connexion détachable (319, 320) comprend un étrier (319) adapté pour recevoir une extrémité de l'arbre (311) éloignée de l'étranglement de décharge (4).

10. Appareil selon l'une quelconque des revendications précédentes, caractérisé par le fait qu'un cadre (310') est monté sur l'appareil.

11. Appareil selon la revendication 10, caractérisé par le fait que le cadre (310') est mobile.

12. Appareil selon la revendication 11, caractérisé par le fait que le cadre (310') comprend un châssis monté sur un moyen rotatif pouvant venir en prise avec le sol (310'') grâce auquel le cadre est adapté pour être mobile.

13. Appareil selon les revendications 4 ou 8, caractérisé par une commande à distance pour le moyen moteur (214, 324).

14. Appareil selon l'une quelconque des revendications 11 à 13, caractérisé par une connexion pour un accouplement à trois points d'un dispositif de tracteur.

15. Appareil selon l'une quelconque des revendications précédentes, caractérisé par le fait que le moyen distributeur (5, 304) comprend un arbre rotatif qui est ajustable en longueur.
